# EUROPEAN PATENT SPECIFICATION

(11) **EP 4 124 589 B1**
(45) Date of publication and mention of the grant of the patent: **28.06.2023**
(21) Application number: 22183002.9
(22) Date of filing: 05.07.2022
(51) Int. Cl.: B65D 85/804, A47J 31/36

(54) **REINFORCEMENT RING FOR CAPSULES FOR OBTAINING BEVERAGES**
VERSTÄRKUNGSRING FÜR KAPSELN ZUR GEWINNUNG VON GETRÄNKEN
ANNEAU DE RENFORT POUR CAPSULES POUR L'OBTENTION DE BOISSONS

(30) Priority: 29.07.2021 IT 202100020315
(43) Date of publication of application: 01.02.2023
(73) Proprietor: Aroma System SRL, 40138 Bologna (IT)
(72) Inventor: RAPPARINI, Gino, Bologna (IT); GENERALI, Maurizio, Bologna (IT)
(74) Representative: Grünecker Patent- und Rechtsanwälte PartG mbB

(56) References cited:
- EP-A1- 3 357 819
- EP-A1- 3 403 547
- US-A1- 2017 210 534

## Description

### FIELD OF TECHNOLOGY

The present invention relates to the field of capsules for obtaining beverages, for example coffee or the like. More in particular, the present invention relates to the field of reinforcement rings for capsules for obtaining beverages.

### STATE OF THE ART

A wide range of reinforcement rings for capsules for obtaining beverages is available on the market. Examples of such rings are described in the European Patent Application published under number EP 2 555 997 A2.

However, the reinforcement rings of known type are often made by using considerable amounts of material, e.g. plastic, therefore they are expensive and unsuitable for meeting the requirements to be classified as biodegradable and/or compostable.

The European Patent Application published under number EP 3 152 134 A1 discloses, for instance, reinforcement rings with reduced thickness zones, so as to decrease the amount of total material used to produce the rings, while still guaranteeing their stability, and to solve the above-mentioned problems.

However, the aim of the present invention is to further reduce the amount of material used to make the rings, so as to make the structure appreciably lighter, to reduce production costs and to meet the requirements of compostability, not only by maintaining the mechanical and functional features of the rings unchanged, but by even improving them.

### SUMMARY

The present invention is based on the idea of making a reinforcement ring for capsules for obtaining beverages having a side wall with one extremity provided with a groove, so as to reduce the total amount of material used to make the ring.

According to an embodiment of the present invention, a reinforcement ring is provided for capsules for obtaining beverages, e.g. coffee, comprising:
a side wall having a first extremity, a second extremity and a thickness; and
a flat surface, preferably having a uniform thickness, protruding from the side wall in correspondence of the first extremity,
wherein the side wall and the protruding flat surface are preferably made as a single body, and the reinforcement ring is characterized in that the side wall includes a groove at the second extremity so as to reduce the thickness of the side wall in correspondence of the second extremity.

This solution is particularly advantageous, because the amount of material used to make the ring is reduced and production costs are consequently reduced. Moreover, the presence of the groove in the side wall of the reinforcement ring allows to make the extremity of the ring thinner and makes it more elastic, thus reducing its fragility and simplifying its processing.

Since the groove is formed only at one extremity of the side wall of the ring, it has also the advantage of increasing the asymmetry in the mass distribution of the system with respect to the rings known to the state of the art, thus helping in orienting the rings in the potential sorting or handling stages during production. In particular, the portion of the side wall comprising the groove has a much lower mass than the portion of the ring comprising the plane protruding from the side wall.

The presence of the groove, by reducing the amount of material used to produce the ring, also assists the decomposition of the ring itself, if it is made of biodegradable or compostable materials. In addition to this, the presence of the groove makes it possible to produce a side wall with an overall thickness of less than 1.6 mm and thus, in the case of using compostable materials, allows more compostable polymers to be used, e.g. HOME COMPOST materials, which often claim compliant thicknesses of less than 1.6 mm.

In the present disclosure, it is to be understood that the side wall of the reinforcement ring forms an annular structure having a thickness, a first extremity and a second extremity, opposite to the first extremity. A flat surface is formed on top of this annular structure, the flat surface forming an annular rim protruding from the side wall at the first extremity. The thickness of the annular structure of the side wall at the second extremity is locally reduced by the presence of a groove, which extends in depth from the surface defining the second extremity, e.g. the groove could be between 1 mm and 6 mm deep.

According to a preferred configuration, the reinforcement ring with a groove is lightened in comparison to structures known to the state of the art and its mass is reduced by 10% or more.

According to the present invention, a reinforcement ring is provided, whose side wall, at the second extremity, is configured to comprise a first portion, facing the outer side of the ring, and a second portion, facing the inner side of the ring, wherein the first portion and the second portion are divided by the groove.

This configuration is advantageous because the groove is formed by simply making a channel from the surface defining the extremity of the side wall of the reinforcement ring opposite the protruding flat surface. The second extremity of the side wall of the ring thus comprises two portions delimiting the groove.

In this disclosure, it is to be understood that the outer side and the inner side of the ring are defined with respect to the center of the ring, which coincides with the center of the circumference delimiting the profile of the ring.

According to a preferred configuration, the first and second portions delimiting the groove may have two different thicknesses, for example the first portion may be thinner than the second portion, or the first portion may be thicker than the second portion. According to an alternative configuration, the two portions at the rims of the groove may be symmetrical and may have the same thickness.

According to a further embodiment of the present invention, a reinforcement ring is provided whose groove forms a continuous line along the perimeter of the reinforcement ring.

This configuration is advantageous because the process of making the groove is quick and easy and ensures a constant elastic behavior around the entire perimeter.

According to a preferred configuration, the groove may form a continuous circumferential line at the second extremity (opposite the protruding flat surface) of the side wall.

According to a further embodiment of the present invention, a reinforcement ring is provided whose groove forms a discontinuous line along the perimeter of the reinforcement ring.

This configuration is advantageous because the process of making the groove is quick and easy and allows the elasticity to be varied at certain predefined points.

According to a preferred configuration, the groove may form a discontinuous line, e.g. a dotted line, around the perimeter of the side wall at the second extremity (opposite the protruding flat surface).

According to a further embodiment of the present invention, a reinforcement ring is provided, wherein the groove section has the shape of an upside-down "V" with respect to the second extremity.

This solution is particularly advantageous, because it improves the sealing of the ring when this is used to reinforce the structure of capsules for obtaining beverages accommodated in predefined systems for producing beverages during supplying. In fact, the V-shape of the groove makes it possible to exploit the pressure of the water dispensed during beverage production, because the water, when penetrating the groove, expands the portions of the side wall delimiting the groove and increases the seal against the internal surface of the beverage container.

Moreover, the groove having the shape of an upside-down "V" with respect to the second extremity of the lateral surface is easy to realize during the production of the reinforcement rings.

According to a further embodiment of the present invention, a reinforcement ring is provided, wherein the side wall comprises areas of reduced thickness, so as to further reduce the total amount of material used to produce the ring.

This solution is particularly advantageous because it makes the ring even lighter and it reduces production costs, while keeping unchanged the stability and the reinforcement function of the ring.

According to a preferred configuration, the areas of reduced thickness may comprise recesses formed along the side wall of the ring, for example on the external surface or on the internal surface of the side wall of the ring. For example, such reduced thickness zones may be formed periodically on the external or internal surface of the side wall and may for example have the shape of a U or a V relative to the protruding flat surface.

According to a further embodiment of the present invention, a reinforcement ring is provided, wherein the flat surface includes a groove around the perimeter.

This solution is particularly advantageous because the groove on the flat surface simplifies the process of welding a sealing element, for instance a sealing film, to the reinforcement ring. Moreover, the presence of a groove also on the flat surface further reduces the amount of material used to make the ring.

In this disclosure, it is to be understood that the flat surface of the reinforcement ring has a perimeter, for example a circular perimeter, and the groove is formed along that perimeter. For example, the groove of the flat surface may form a continuous circular line along the perimeter of the flat surface, or it may form for example a discontinuous line along the perimeter of the flat surface.

According to a further embodiment of the present invention, a reinforcement ring is provided comprising biodegradable and/or compostable and/or biobased material, e.g. PLA, PHA, PBS, Starch Blends, biobased PE, PET, PA, PT.

This solution is particularly advantageous because the amount of material used to produce the ring with the groove is less than the amount of material commonly used for rings known to the state of the art, and thus the decomposition of the ring after disposal is further promoted.

According to a further embodiment of the present invention, a capsule for obtaining beverages, such as coffee, is provided, the capsule comprising a reinforcement ring such as the ones described above and a capsule body configured to form a containment volume for the product used to obtain the desired beverage, for instance ground coffee.

This configuration is particularly advantageous because the capsule for obtaining beverages has better stability and reliability due to the presence of the reinforcement ring attached to the capsule body, but the structure of the reinforcement ring is lightened and made more flexible by the presence of the groove. The handling, flexibility and adaptability of the capsule as a whole are thus simplified.

According to a further embodiment of the present invention, a capsule is provided, wherein the capsule body is made of a thermoformable filter material and is attached to the side wall of the reinforcement ring by welding.

This configuration is particularly advantageous because, by means of welding, the filter material of the capsule body is firmly and securely fixed to the reinforcement ring. During the welding process of the filter material of the capsule body to the reinforcement ring, the fact that the internal part of the reinforcement ring is thinner and more flexible helps its adaptation to the geometry of the welder. Preferably, a welder with a fixed geometry is used during the welding process, e.g. a conical welder with fixed geometry, which is better suited for flexible reinforcement rings.

According to a further embodiment of the present invention, a method for producing a capsule such as the ones described above is provided, said method comprising a welding step realized by means of a fixed geometry welder, wherein the capsule body is welded to the reinforcement ring from the inner side of the capsule body, after the capsule body has been inserted into the reinforcement ring, and wherein at least one portion of the side wall of the reinforcement ring is configured to be elastically deformed, thanks to the presence of the groove, and to adapt itself to the structure of the fixed-geometry welder during the step of welding the capsule body to the reinforcement ring.

This configuration is particularly advantageous because, in the process of welding the filter material of the capsule body to the reinforcement ring, the fact that the internal part of the reinforcement ring is thinner and more flexible assists its adaptation to the geometry of the welder.

Preferably, a fixed-geometry welder is used during the welding process, since it is easier to use than a variable-geometry welder. In fact, a variable-geometry welder needs, for example, to divide the welding process of the circular surface into two or more steps separated by a time interval in which the variable geometry welder needs to rotate around its own axis in order to make a circular weld.

The fixed-geometry welder is better suited to flexible reinforcement rings, because the thin, elastic side wall of the ring can conform to the structure of the welder, thus compensating for any geometric differences between the two objects (for instance, in the case that the reinforcement rings are slightly deformed, such as made oval, compared to their nominal structure) and/or differences in positioning (for instance, in the case that the system that transports the rings under the welder loses precision due to use or various malfunctions). In particular, the internal portion of the side wall in contact with the welder elastically deforms during welding operations.

According to a further embodiment of the present invention, a method for producing a capsule such as the ones described above is provided, wherein the side wall in correspondence of the groove comprises a first portion facing the outer side of the capsule and a second portion facing the inner side of the capsule, and the second portion is configured to deform elastically when placed in contact with the fixed-geometry welder, so as to assist welding of the capsule body to the reinforcement ring.

This configuration has the advantage that the second portion of the side wall of the ring, which is thin and elastic, can be adapted to the structure of the welder, thus compensating for any geometric differences between the two objects (for instance, in the case that the reinforcement rings are slightly deformed, such as made oval, with respect to their nominal structure) and/or differences in positioning (for instance, in the case that the system that transports the rings under the welder loses precision due to use or various malfunctions). The operation of welding the reinforcement ring to the filter body is thus simplified and sped up.

According to a further embodiment of the present invention, a method is provided for the production of beverages by means of a system comprising:
a capsule like the ones described above; and
a container configured to accommodate the capsule during the step of supplying pressurized water for the production of the beverage, the container comprising a lateral surface and a bottom forming the compartment configured to accommodate the capsule during the supply;

wherein the method comprises the step of making a seal between a predefined portion of an internal surface of the lateral surface of the container and at least one portion of the side wall of the reinforcement ring,
wherein at least one portion of the side wall of the ring is configured to deform elastically, thanks to the presence of the groove, when it comes into contact with the predefined portion of the internal surface of the container, and is configured to adapt to the geometry of the predefined portion of the internal surface, so as to avoid the leakage of the beverage from the interface between the reinforcement ring and the container.

This configuration is particularly advantageous because the reinforcement ring provided with a groove is particularly flexible and elastic, therefore it can deform elastically, thus guaranteeing the sealing of the capsule accommodated in the predefined container for producing beverages, even at high pressures. For example, if the size of the container in which the capsule is accommodated is increased or decreased, for instance for production or sales reasons, the presence of a reinforcement ring with a groove, and thus light and flexible, ensures an optimal sealing, thanks to the fact that the side wall can adapt to the shape and structure of the container. The elasticity of the ring could, for example, make it possible to compensate for any geometric differences between the capsule with the reinforcement ring and the container, for instance a capsule with a circular reinforcement ring could be used in a container that is not perfectly circular, but for example oval.

In particular, the portion of the reinforcing wall facing the outer side of the capsule can advantageously deform elastically and thus compensate for any structural differences between the two objects.

According to a further embodiment of the present invention, a method for producing a beverage is provided, wherein the side wall has a first diameter and the compartment has a second diameter in correspondence of the accommodating portion of the reinforcement ring and the first diameter is equal to or greater than the second diameter, and the step of making a seal implies that at least one portion of the side wall is elastically deformed when in contact with the internal surface, so that the elastic deformation allows the reinforcement ring to be inserted into the compartment and allows the seal to be realized.

This configuration is particularly advantageous because any differences in diameter between the first diameter of the side wall of the reinforcement ring and the second diameter of the internal surface of the container can be compensated for by a local elastic deformation of the reinforcement ring in contact with the internal surface of the container.

It is to be understood that the first diameter of the side wall of the ring refers to the diameter of the circumference of the reinforcement ring and the second diameter of the internal surface of the container indicates the diameter of the circumference defined by the internal surface of the container in correspondence of the region where the capsule ring is accommodated.

According to a further embodiment of the present invention, a method for the production of a beverage is provided, wherein the step of making a seal implies that, during the step of supplying pressurized water, at least one part of the pressurized water enters the groove and elastically deforms at least one portion of the side wall, thereby making a seal between the side wall and the internal surface.

This solution has the advantage of exploiting the pressure of the water supplied during the production of the beverage to improve the sealing of the ring, when it is used to reinforce the structure of the capsules for obtaining beverages accommodated in predefined beverage production systems. As the water enters the groove, it expands the portions of the side wall delimiting the groove and increases the seal against the walls of the container for producing beverages.

According to an exemplificative configuration, the first diameter of the side wall could be equal to the second diameter of the internal surface of the container and the elastic deformation of the side wall of the ring as a result of the pressure of the supplied water could improve the seal between the ring and the container by pressing even more the side wall, in particular the portion of the side wall facing the container compartment, against the internal surface of the container.

According to a further exemplificative configuration, the first diameter of the side wall could be smaller than the second diameter of the internal surface of the container, and the seal between the ring and the container would thus be ensured by the elastic deformation of the side wall of the ring due to the pressure of the supplied water. On the other hand, if the side wall did not have a groove and could not deform elastically against the internal surface of the container, the seal would not be optimal and the beverage could leak out of the gap between the ring of the capsule and the rim of the housing.

According to a further embodiment of the present invention, a method for the production of a beverage is provided, wherein the side wall in correspondence of the groove forms a first portion, facing the compartment, having a first thickness and a second portion, facing the capsule body, having a second thickness, and the first thickness is less than the second thickness, so as to assist the elastic deformation of the first portion and make said seal.

This configuration has the advantage that the first portion, in contact with the container compartment, is particularly thin and flexible and is therefore configured to deform elastically and ensure an even better seal between the ring and the container walls.

### BRIEF DESCRIPTION OF THE FIGURES

The present invention will be described with reference to the enclosed figures, wherein the same and/or similar numbers and/or signs indicate the same and/or corresponding parts of the system.
Fig. 1 schematically illustrates an external three-dimensional view of a reinforcement ring provided with a groove in the side wall, according to an embodiment of the present invention;
Fig. 2 schematically illustrates an external three-dimensional view of a reinforcement ring additionally provided with areas of reduced thickness on the internal surface of the side wall, according to a further embodiment of the present invention;
Fig. 3 schematically illustrates a cross-sectional view of a reinforcement ring further provided with a groove on the flat surface, according to a further embodiment of the present invention.
Fig. 4 schematically illustrates an external three-dimensional view of a capsule for producing beverages provided with a reinforcement ring according to an embodiment of the present invention;
Fig. 5 schematically illustrates a cross-sectional view of a welding station for welding the reinforcement ring to the body of a beverage capsule, according to a particular embodiment of the present invention;
Fig. 6 schematically illustrates a cross-sectional view of a welding station during the step of welding the reinforcement ring to the body of a beverage capsule, according to an embodiment of the present invention;
Fig. 7 schematically illustrates an exploded view of a system for the production of beverages comprising a capsule and a container suitable for accommodating the capsule during supplying, according to an embodiment of the present invention.
Fig. 8 schematically illustrates a cross-sectional view of the system for producing beverages shown in Fig. 7, during a stage of use.
Fig. 9 schematically illustrates a cross-sectional view of the system for producing beverages shown in Fig. 7, during a further stage of use.
Fig. 10 schematically illustrates a cross-sectional view of the system for producing beverages shown in Fig. 7, during a further stage of use.

### DETAILED DESCRIPTION

In the following, the present invention is described with reference to particular embodiments, as illustrated in the enclosed drawing plates. However, the present invention is not limited to the particular embodiments described in the following detailed description and illustrated in the figures, but rather the described embodiments merely exemplify the various aspects of the present invention, the scope of which is defined by the claims. Further modifications and variations of the present invention will be apparent to those skilled in the art.

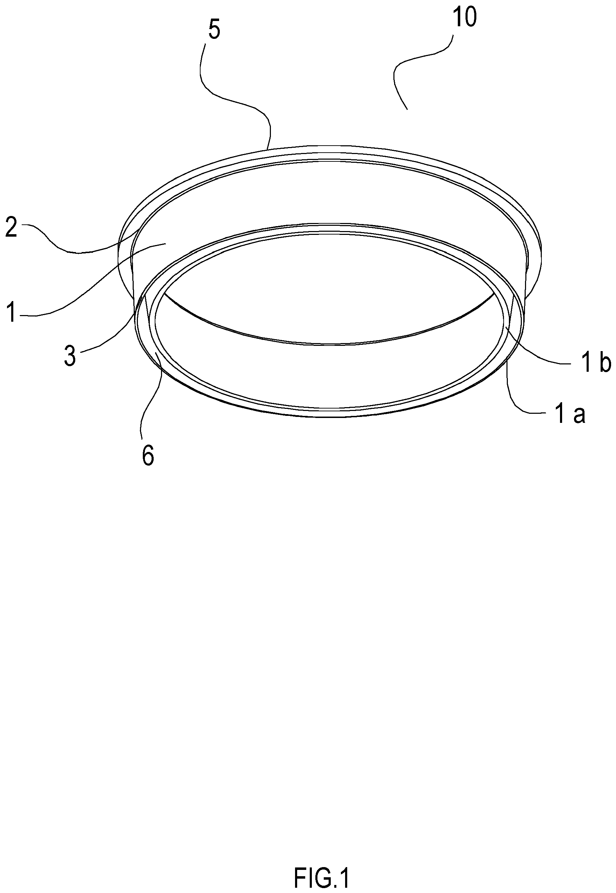

Figure 1 schematically illustrates a reinforcement ring 10 for capsules for obtaining beverages according to an embodiment of the present invention.

The reinforcement ring 10 may be used to reinforce the structure of capsules for obtaining beverages, such as American coffee. The reinforcement ring 10 according to the present invention comprises an annular side wall 1 having a first extremity 2 (the upper extremity in Fig. 1), on top of which a flat surface 5 is formed, and a second extremity 3 (the lower extremity in Fig. 1), opposite to the first extremity. The flat surface 5 thus comprises an annular flat surface protruding from the side wall 1 at the first extremity 2. The side wall 1 further comprises a groove 6 at the second extremity 3, so as to form a first portion 1a and a second portion 1b of the side wall 1 at the second extremity 3, divided by the groove 6. In this way, the total thickness of the side wall 1 at the second extremity 3 is reduced and the total amount of material used to produce the ring 10 is decreased.

The side wall 1 and the protruding flat surface 5 are preferably realized as a single body. The side wall 1 may have a uniform thickness, according to a particular embodiment shown in Fig. 1.

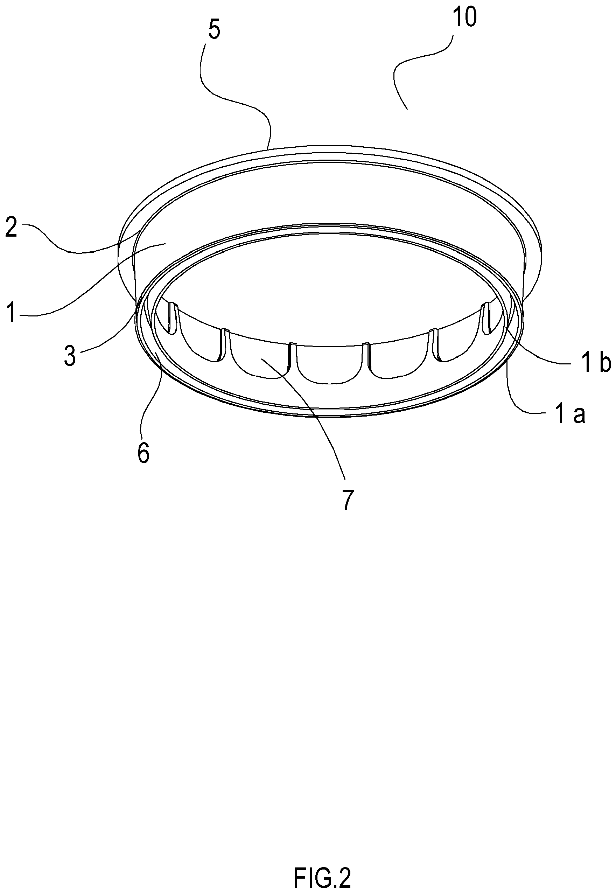

According to an alternative embodiment shown in Fig. 2, the side wall 1 may have areas of reduced thickness 7, i.e. recesses formed on the side wall 1 of the ring. The areas of reduced thickness 7 may be formed, for example, on the surface facing the inner side of the ring 10 (as shown in Fig. 2) or on the surface facing the outer side of the ring 10. An example of a reinforcement ring for capsules for obtaining beverages having a side wall with areas of reduced thickness is described in the patent application EP 3 152 134 A1 by the same applicant, the content of which is fully incorporated herein by reference.

The protruding flat surface 5 is preferably of uniform thickness.

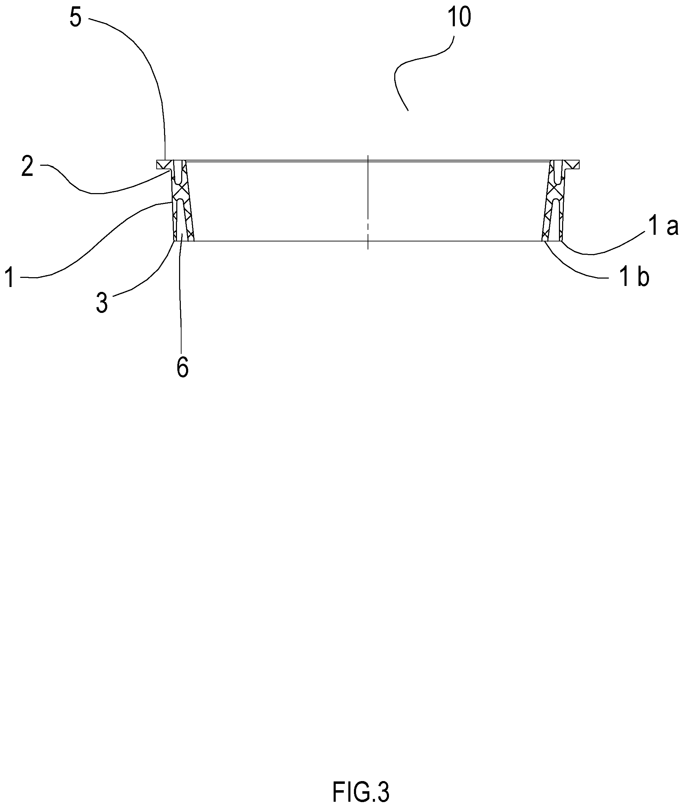

According to a further embodiment illustrated in Fig. 3, the reinforcement ring 10 may have both a groove 6 in the side wall 1 and a groove 8 on the flat surface 5. Preferably, the groove 8 may form, for example, a continuous circular groove along the perimeter of the flat surface 5. According to an alternative configuration, the groove 8 may form for example a discontinuous circular groove along the perimeter of the flat surface 5. In this way, due to the presence of the groove 8 on the flat surface 5, the welding of a sealing element 11, for example a sealing film, to the reinforcement ring 10 is assisted.

According to a further embodiment not shown in the figures, the reinforcement ring 10 may have a groove 6 in the side wall 1, a groove 8 on the flat surface 5 and areas of reduced thickness 7 on the internal and/or external surface of the side wall 1 of the ring. In this way, the amount of material used to produce the ring is significantly reduced.

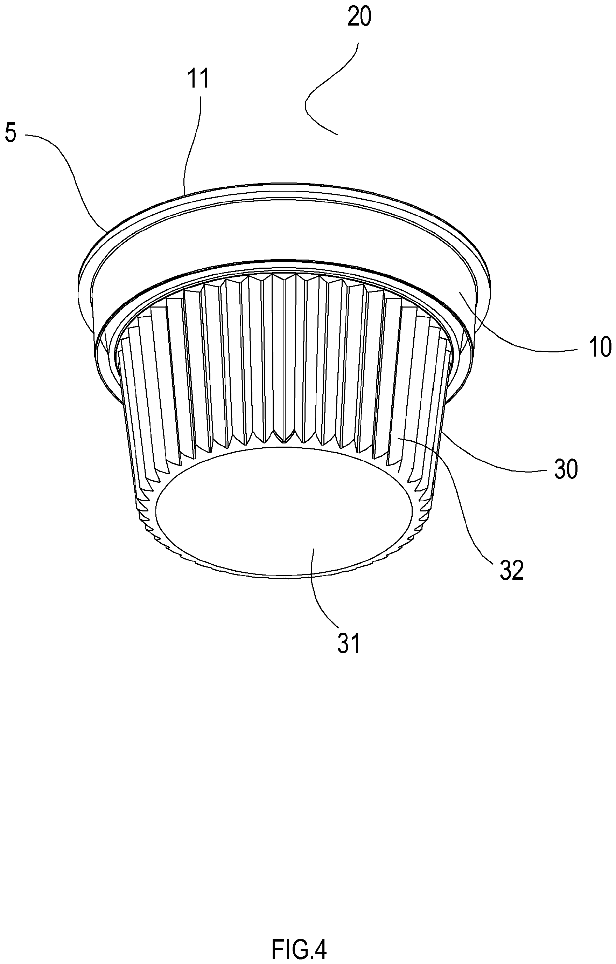

Fig. 4 schematically illustrates a capsule 20 for obtaining beverages, such as American coffee, comprising a reinforcement ring 10 and a capsule body 30. The capsule body 30 defines a containment volume for the product used to obtain the desired beverage, such as ground coffee, and it is advantageously made of filter material, for example filter paper or thermoformable filter material. Such filters have indeed the advantage of being environmentally friendly. The presence of the reinforcement ring 10 in the capsule 20 is necessary to give stability and robustness to the capsule body 30 made of filter material.

The capsule 20 may further comprise a sealing element 11 welded to the flat surface 5 protruding from the reinforcement ring 10, for instance a sealing element 11 heat sealed to the flat surface 5.

The capsule 20 shown in Fig. 4 has a capsule body 30 having a substantially flat bottom wall 31 and a pleated side wall 32, i.e. made in regular or irregular folds. Furthermore, the diameter of the bottom 31 of the capsule body 30 is smaller than the diameter of the upper rim of the capsule body 30, so that the capsule body 30 has a truncated cone shape. Capsules of this type are described for example in patent EP 3 357 819 B1 by the same applicant, the content of which is fully incorporated herein by reference. In particular, the patent EP 3 357 819 B1 relates to a method and a machine for forming beverage capsules comprising a pleated capsule body and a reinforcement element and describes, in paragraphs [0074-0084], the process of welding the pleated capsule body to the reinforcement element and the corresponding welding station. It is to be understood that a welding process similar to the one presented in EP 3 357 819 B1 may be performed, for example, to attach the reinforcement ring 10 to the capsule body 30, according to a particular embodiment of the present invention.

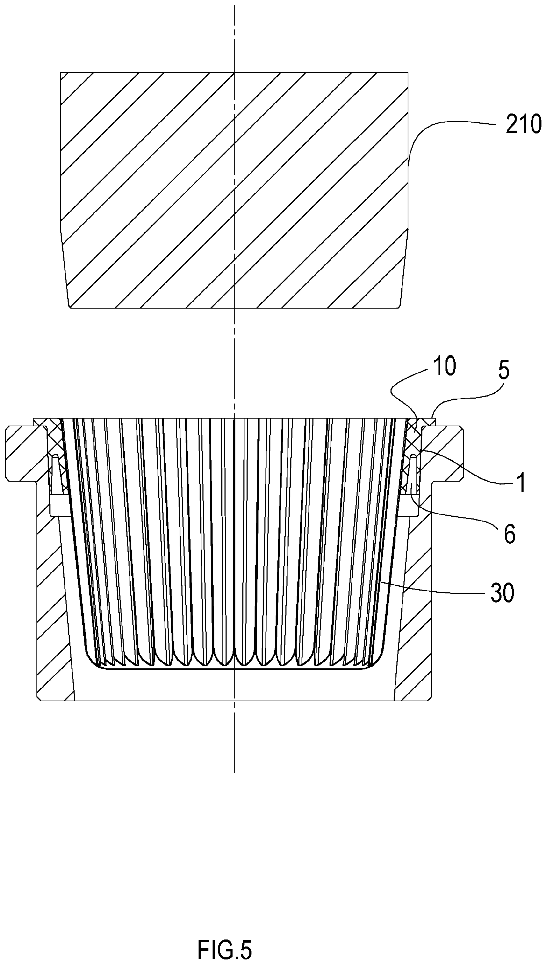

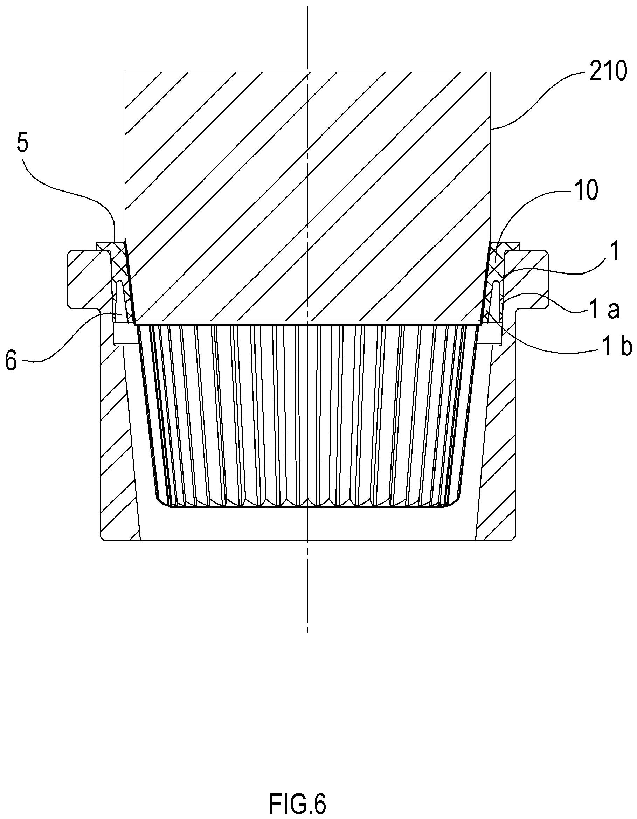

In the following, with reference to Figs. 5 and 6, the advantages of the configuration of the reinforcement ring 10 provided with a groove 6, according to the present invention, during the steps of welding the reinforcement ring 10 itself to the capsule body 30, for example according to the method described in EP 3 357 819 B1, will be highlighted.

Fig. 5 and 6 schematically illustrate the steps of welding the reinforcement ring 10 to the capsule body 30 to form the beverage capsule 20, according to an embodiment of the present invention.

The welder 210, as shown in the figures, has a fixed geometry. This configuration makes the welding operation easier and safer. As described above, there is a difference in diameters between the bottom 31 of the capsule body 30 and the upper rim of the capsule body 30. This results in a capsule body 30 having a pronounced frusto-conical shape, into which it is easier to insert a fixed-geometry welder 210 without having to resort to a variable-geometry welder. This is preferable as the variable-geometry welder is intrinsically more complex, since, for example, making a circular welding implies dividing the welding process of the circular surface into at least two steps separated by a time interval during which the welder makes a rotation around its own axis.

As shown in Fig. 5, the capsule body 30 is initially placed inside the reinforcement ring 10. The fixed-geometry welder 210 is positioned above the capsule 20, coaxially to it, and it is brought closer to the capsule 20. When the welder 210 reaches the inner side of the capsule 20, welding between the capsule body 30 and the reinforcement ring 10 is performed. The welding may be done, for example, by means of a hot bar or by other technologies such as ultrasound or induction.

As shown in Fig. 6, when the welder 210 is inserted inside the capsule 20, the reinforcement ring 10 elastically deforms and adapts to the geometry of the welder 210, thus compensating for any differences in structure and/or positioning. In particular, the second internal portion 1b of the reinforcement ring 10 elastically deforms, by slightly flexing inside the groove 6 of the side wall 1, and adapting to the geometry of the welder 210.

The capsule 20 according to a particular embodiment of the present invention can be used in a system for making beverages, for example an extraction system, known to the state of the art. An example of a system for obtaining beverages wherein a capsule made of a filtering material including a reinforcement ring is used and is inserted into a container suitable for accommodating the capsule during the supplying of the beverage is described in the patent EP 3 403 547 B1 by the same applicant, the content of which is fully incorporated herein by reference.

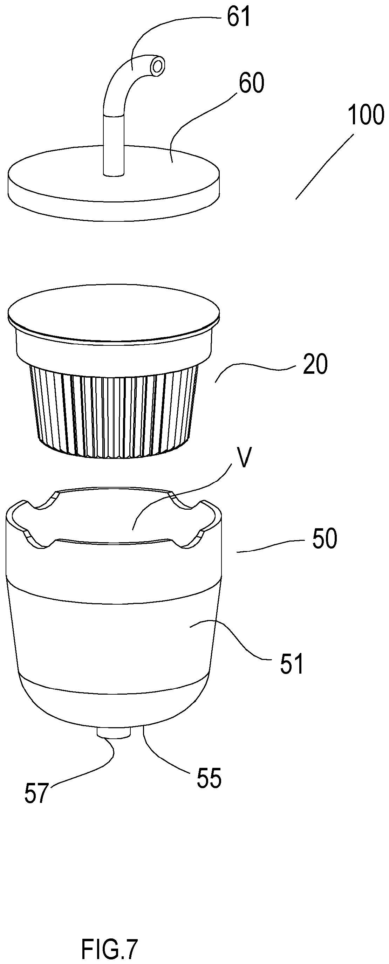

In the following, with reference to Figures 7 to 10, the advantages of using a capsule 20 provided with a reinforcement ring 10 with a groove 6 in the side wall 1, according to an embodiment of the present invention, in a system for the production of beverages such as that presented in EP 3 403 547 B1 will be highlighted.

Fig. 7 shows a system 100 for producing beverages comprising a capsule 20, a container 50 suitable for accommodating the capsule 20 during supplying and a closing element 60 for closing the container 50, according to an embodiment of the present invention. The closing element 60 is further provided with a channel 61 for pressurized water injection. The container 50 includes a lateral surface 51 and a bottom surface 55, forming a compartment V suitable for accommodating the capsule 20 during supplying. The container 50 further comprises a supplying channel 57, for supplying the final beverage.

According to an illustrative embodiment of the present invention, the container 50 may be configured, for example, as the container A described in EP 3 403 547 B1.

The capsule 20 provided with a reinforcement ring 10 with a groove 6, according to an embodiment of the present invention, can be advantageously used in a system 100 for producing beverages such as the one illustrated in Fig. 7, because it conforms to containers 50 with internal diameters slightly different from the nominal ones, as explained below.

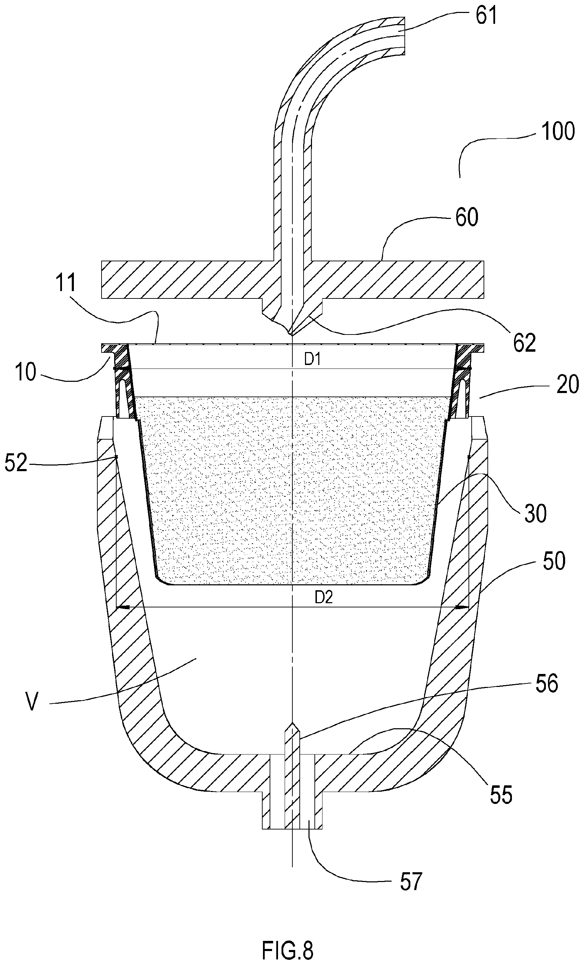

Fig. 8 schematically illustrates a cross-sectional view of the system for producing beverages according to an embodiment of the present invention, during a stage of use.

This figure shows the initial step, wherein the capsule 20 is accommodated in the compartment V of the container 50 and the closing element 60 is placed on top of the capsule 20 to close the container 50.

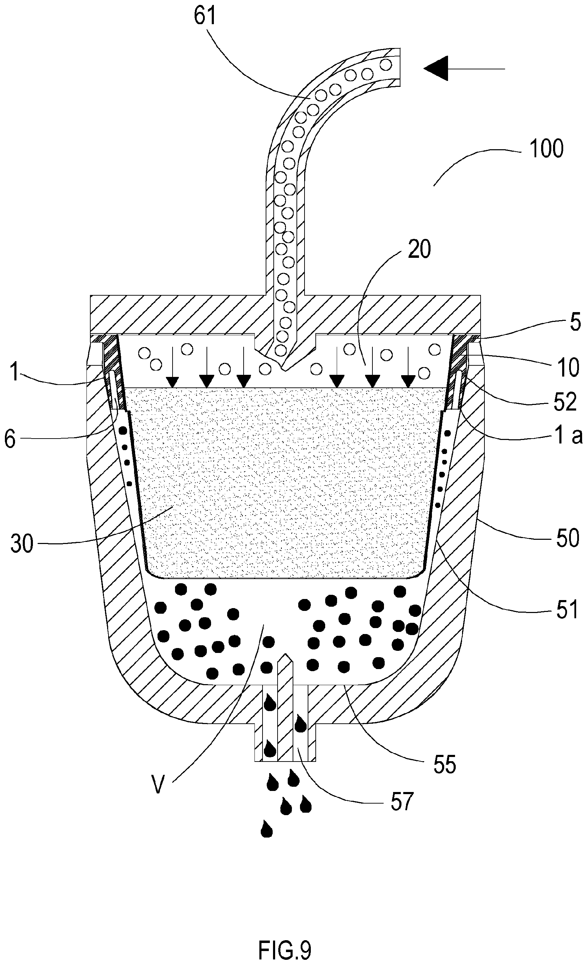

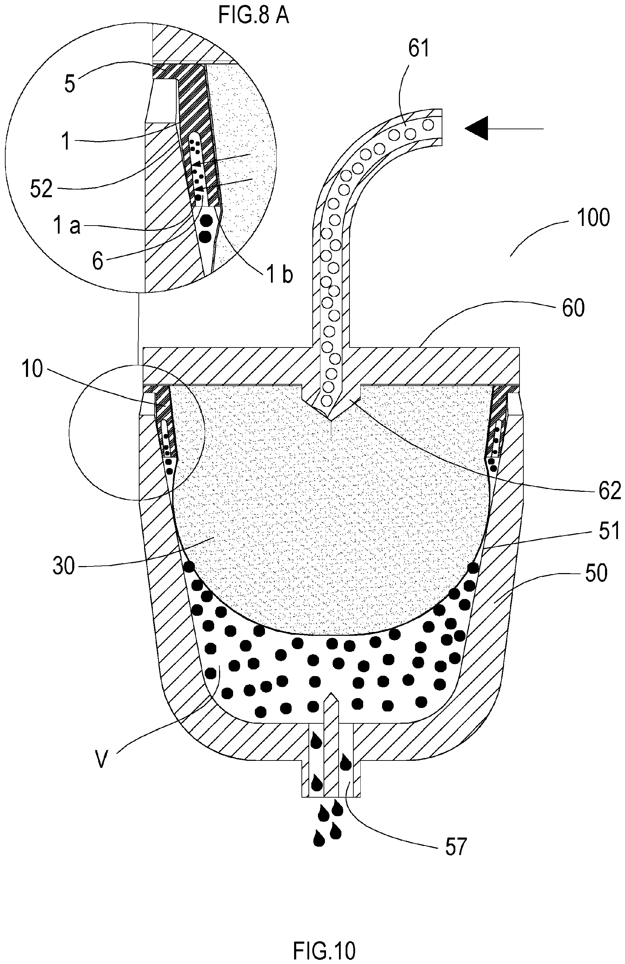

The capsule 20 is accommodated in the compartment V of the container 50 so that the reinforcement ring 10 is in contact, partially or totally, with a portion of the internal lateral surface 52. The side wall 1 of the reinforcement ring 10 has a diameter D1. The upper internal surface 52 of the container 50 has a diameter D2 in correspondence of the sealing area. Preferably, the diameter D1 of the side wall 1 is equal to the diameter D2 of the internal surface 52. However, as explained below with reference to Figs. 9 and 10, the particular structure of the ring 10 provided with a groove 6 allows for an optimal sealing between the ring wall 1 and the upper internal surface 52 even if the diameter D1 is slightly larger or slightly smaller than the diameter D2.

The closing element 60 comprises a channel 61 for high-pressure water injection and a first perforating element 62, for example a perforating needle. The closing element 60 is rested on the sealing element 11 of the capsule 20, so that the first perforating element 62 pierces the sealing element 11 and the water supplied under pressure can subsequently enter the capsule 20 through the conduit 61. The second perforating element 56, formed on the bottom 55 of the container 50, is not in contact with the capsule body 30 made of filtering material.

Fig. 9 schematically illustrates a cross-sectional view of the system for producing beverages of Fig. 8, during a further stage of use.

In Fig. 9, a stage is shown, wherein the system 100 for producing beverages is assembled and pressurized water is supplied to the capsule body 30 and to the compartment V, through the channel 61. The pressurized water enters the capsule body 30 where the product for producing the beverage is contained and the beverage is thus obtained. The beverage, when exiting the filter capsule body 30, collects itself in the compartment V and is finally dispensed through the supplying channel 57.

In Fig. 9, it can be seen that the protruding flat surface 5 of the reinforcement ring 10 rests on the upper rim of the container 50 and that the lower external portion 1a of the side wall 1 of the reinforcement ring 10 is in contact with the upper internal surface 52 of the container 50. In this way, a seal is formed between the side wall 1 of the reinforcement ring 10 and the upper internal surface 52 of the container 50, and high-pressure water is prevented from also escaping from the container 50, when exiting the capsule body 30 made of filtering material and passing through the interface between the reinforcement ring 10 and the container 50.

Even if Fig. 9 shows that the seal is made with the external lower portion 1a of the side wall 1 of the reinforcement ring 10, an alternative configuration is also possible, wherein the seal is made between the entire side wall 1 of the reinforcement ring 10 and the internal surface 52 of the side wall 51 of the container 50.

The sealing can be obtained by making the side wall 1 of the reinforcement ring 10, or only its lower portion 1a, so as to have an external diameter that makes a seal with the internal surface 52 of the side wall 51 of the container 50, in at least a predefined portion thereof. This can be achieved both by adapting the dimensions of the entire capsule 20, i.e. the dimensions of the capsule body 30 and the reinforcement ring 10, to those of the container 50, and by increasing or decreasing the thickness of the side wall 1 of the reinforcement ring 10, or only of its lower portion 1a.

Alternatively, the side wall 1 of the reinforcement ring 10 or only its lower portion 1a may be made so that their external wall has a predefined grade with respect to the internal surface 52 of the side wall 51, in at least a predefined portion thereof, so as to make a seal with it.

Alternatively, the profile of the external wall of the side wall 1 of the reinforcement ring 10 or only of its external lower portion 1a may be realized so as to match the profile of the internal surface 52 of the side wall 51, in at least a predefined portion thereof, so as to make a seal therewith. For example, the internal surface 52 could comprise a step and the side wall 1 could be made with a corresponding step.

The sealing systems described above, based on the contact between the side wall 1 of the reinforcement ring 10 and the internal surface 52 of the container, are effective, but the seals could be compromised by varying the geometries that make up the system. For example, if the diameter D2 of the container 50 were to be increased or decreased from its nominal value due to manufacturing defects or if it were to be modified for commercial requirements, this could result in poor sealing (in the case of an increase in diameter D2), or it could be difficult or impossible to insert the capsule 20 with the reinforcement ring 10 into the container 50 (in the case of a decrease in diameter D2).

The diameter D2 is to be understood here as the diameter of the circular section of the container 50 in correspondence of the internal surface 52.

The use of a capsule 20 provided with a reinforcement ring 10 with a groove 6, according to an embodiment of the present invention, in the system 100 for producing beverages solves the above-mentioned problems. In fact, the structure of the ring 10 wherein the side wall 1 is provided with a groove 6 gives greater flexibility and adaptability to the ring 10. Any differences in diameter between the diameter D1 of the side wall 1 of the reinforcement ring 10 and the diameter D2 of the internal surface 52 of the container 50 can thus be compensated for by a local elastic deformation of the reinforcement ring 10 at the first portion 1a in contact with the internal surface 52 of the container 50.

In this way, an optimal seal is ensured even if, for example, the reinforcement ring 10 has a slightly larger diameter D1 than the diameter D2, because, when inserting the capsule 20 with the reinforcement ring 10 into the container 50, the portion 1a of the side wall 1 may deform elastically.

In the event that, for example, the diameter D1 of the side wall 1 is slightly smaller than the diameter D2 of the container 50, sealing is ensured by the elastic deformation of the side wall 1, in particular of the first external portion 1a, due to the push of the pressurized water, as described below in connection with Fig. 10.

Fig. 10 schematically illustrates a cross-sectional view of the system for producing beverages of Fig. 9 during a further stage of use. In particular, Fig. 10 shows the configuration of the system 100, following a prolonged exposure to pressurized water supplied within the capsule body 30.

The supplying of pressurized water inside the capsule body 30 made of filtering material causes it to be deformed, due to the resistance opposed to the passage of water by the filtering material of the capsule body 30 and/or by product for beverage production contained therein. The beverage obtained from the product contained in the capsule body 30 and from the pressurized water eventually exits from the capsule body 30 and accumulates in the compartment V, and then exits through the supply channel 57 of the beverage. As explained with reference to Fig. 9, the seal between the side wall 1 of the reinforcement ring 10 and the internal surface 52 of the container 50 prevents the beverage from exiting from the interface between the reinforcement ring 10 and the container 50.

As can be seen in Fig. 10, during the step of supplying the pressurized water, part of the beverage contained in the container 50 leaks into the groove 6 of the side wall 1 and creates a pressure on the first portion 1a and the second portion 1b. The elastic walls of the first portion 1a and of the second portion 1b will then tend to deform elastically and adhere firmly (in the case where the diameter D1 is slightly smaller than the diameter D2), or even more firmly (in the case where the two diameters D1 and D2 are essentially equal) to the internal surface 52 of the container 50, thereby ensuring an optimal seal. In particular, as shown in detail in Fig. 10A, the first external portion 1a can advantageously be made thinner than the second internal portion 1b: in this way, the elastic deformation of the first external portion 1a on the internal surface 52 of the container 50 is further assisted and an even better seal is ensured.

Even if the present invention has been described with reference to the embodiments disclosed above, it is clear to the person skilled in the art that various modifications of the present invention can be realized in the light of the teachings described above and within the scope of the appended claims, without departing from the object and scope of protection of the invention.

Furthermore, those areas that are considered to be known to the person skilled in the art have not been described in order to avoid unnecessarily overshadowing the described invention.

Accordingly, the invention is not limited to the embodiments described above, but it is only limited by the scope of protection of the appended claims.

### REFERENCE NUMBERS

1: side wall of the reinforcement ring
1a: first portion of the side wall
1b: second portion of the side wall
2: first extremity of side wall
3: second extremity of side wall
5: flat surface of the reinforcement ring
6: groove of the side wall
7: areas of reduced thickness
8: groove of the flat surface
10: reinforcement ring
11: sealing element
20: capsule for obtaining beverages
30: capsule body
31: bottom of the capsule
32: side wall of the capsule
50: container
51: side wall of the container
52: internal surface of the container
55: bottom of the container
56: second perforating element
57: supply channel
60: closing element of the container
61: channel for pressurized water
62: first perforating element
100: system for producing a beverage
210: welder
D1: first diameter
D2: second diameter
V: compartment

## Claims

1. A reinforcement ring (10) for capsules for obtaining beverages, for instance coffee, comprising:
- A side wall (1) having a first extremity (2), a second extremity (3) and a thickness (4); and
- A flat surface (5), preferably having a uniform thickness, protruding from said side wall (1) in correspondence of said first extremity (2),
wherein said side wall (1) and said protruding flat surface (5) are preferably made as a single body,
**characterized in that:**
said side wall (1) comprises a groove (6) in correspondence of said second extremity (3), so as to reduce said thickness (4) of said side wall (1) in correspondence of said second extremity (3), and
wherein said side wall (1), in correspondence of said second extremity (3), is configured so as to include a first portion (1a), facing the outer side of said ring (10), and a second portion (1b), facing the inner side of said ring (10), said first portion (1a) and said second portion (1b) being divided by said groove (6).

2. The reinforcement ring (10) according to claim 1, wherein said groove (6) forms a continuous line along the perimeter of said reinforcement ring (10).

3. The reinforcement ring (10) according to claim 1, wherein said groove (6) forms a discontinuous line along the perimeter of said reinforcement ring (10).

4. The reinforcement ring (10) according to any one of the previous claims, wherein the cross-section of said groove (6) has the shape of an upside-down V with respect to said second extremity (3).

5. The reinforcement ring (10) according to any one of the previous claims, wherein said side wall (1) comprises reduced thickness areas (7), so as to further reduce the total amount of material used for the production of said ring (10).

6. The reinforcement ring (10) according to any one of the previous claims, wherein said flat surface (5) comprises a groove (8) along its perimeter.

7. The reinforcement ring (10) according to any one of the previous claims, wherein said reinforcement ring (10) comprises of a biodegradable and/or compostable and/or bio based material, for instance PLA, PHA, PBS, Starch Blends, bio based PE, PET, PA, PT.

8. A capsule (20) for obtaining beverages, for instance coffee, comprising:
- A reinforcement ring (10) according to any one of the claims 1 to 7; and
- A capsule body (30) configured to form a containment volume for the product used for obtaining the desired beverage, for instance ground coffee.

9. The capsule (20) according to claim 8, wherein said capsule body (30) is made of a thermoformable filter material and is fixed to said side wall (1) of said reinforcement ring (10) through welding.

10. A method for the production of a capsule (20) according to claim 8 or 9, said method comprising a welding step realized through a fixed geometry welder (210),
wherein said capsule body (30) is welded to said reinforcement ring (10) from the inner side of said capsule body (30), after that said capsule body (30) has been inserted into said reinforcement ring (10), and
wherein at least one portion of said side wall (1b) of said reinforcement ring (10) is configured to elastically deform, thanks to the presence of said groove (6), and to adapt itself to the structure of said fixed geometry welder (210) during said step of welding said capsule body (30) to said reinforcement ring (10).

11. The method according to claim 10, wherein said second portion (1b) is configured to elastically deform when it is placed in contact with said fixed geometry welder (210), so as to assist the welding of said capsule body (30) to said reinforcement ring (10).

12. A method for the production of beverages by means of a system (100) comprising:
- a capsule (20) according to claim 8 or 9; and
- a container (50) configured to accommodate said capsule (20) during the step of supplying pressurized water for the production of the beverage, said container (50) comprising a lateral surface (51) and a bottom (55) forming the compartment (V) configured to accommodate said capsule (20) during the supply;
said method comprising the step of making a seal between a predefined portion of an internal surface (52) of said lateral surface (51) of said container (50) and at least one portion of said side wall (1a) of said reinforcement ring (10),
wherein said at least one portion of said side wall (1a) is configured to elastically deform, thanks to the presence of said groove (6), when it is in contact with said predefined portion of said internal surface (52), and is configured to adapt to the geometry of said predefined portion of said internal surface (52), so as to avoid the leakage of said beverage from the interface between said reinforcement ring (10) and said container (50).

13. The method for the production of a beverage according to claim 12, wherein said side wall (1) has a first diameter (D1) and said compartment (V) has a second diameter (D2) in correspondence of said accommodating portion of said reinforcement ring (10) and said first diameter (D1) is equal or greater than said second diameter (D2), and
said step of making a seal implies that at least one portion of said side wall (1a) elastically deforms when in contact to said internal surface (52), so that said elastic deformation allows the insertion of said reinforcement ring (10) in said compartment (V) and allows said seal.

14. The method for the production of a beverage according to claim 12 or 13, wherein said step of making a seal implies that, during the step of supplying pressurized water, at least one part of said pressurized water enters said groove (6) and elastically deforms at least one portion of said side wall (1a), thus making a seal between said side wall (1) and said internal surface (52).

15. The method for the production of a beverage according to any one of the claims 12 to 14, wherein said first portion (1a) faces towards said compartment (V) and has a first thickness, and said second portion (1b) faces towards said capsule body (30) and has a second thickness, and said first thickness is thinner than said second thickness, so as to assist said elastic deformation of said first portion (1a) and to make said seal.

## Patentansprüche

1. Verstärkungsring (10) für Kapseln zum Bereiten von Getränken, beispielsweise Kaffee, der umfasst:
- eine Seitenwand (1) mit einem ersten äußersten Ende (2), einem zweiten äußersten Ende (3) und einer Dicke (4); sowie
- eine plane Fläche (5), vorzugsweise mit einer gleichmäßigen Dicke, die von der Seitenwand (1) in Entsprechung zu dem ersten äußersten Ende (2) vorsteht,
wobei die Seitenwand (1) und die vorstehende plane Fläche (5) vorzugsweise als ein einzelner Körper ausgeführt sind,
**dadurch gekennzeichnet, dass:**
die Seitenwand (1) eine Nut (6) in Entsprechung zu dem zweiten äußersten Ende (3) umfasst, um die Dicke (4) der Seitenwand (1) in Entsprechung zu dem zweiten äußersten Ende (3) zu verringern, und
wobei die Seitenwand (1) in Entsprechung zu dem zweiten äußersten Ende (3) so ausgeführt ist, dass sie einen ersten Abschnitt (1a), der der Außenseite des Rings (10) zugewandt ist, sowie einen zweiten Abschnitt (1b) einschließt, der der Innenseite des Rings (10) zugewandt ist, wobei der erste Abschnitt (1a) und der zweite Abschnitt (1b) durch die Nut (6) geteilt werden.

2. Verstärkungsring (10) nach Anspruch 1, wobei die Nut (6) eine durchgehende Linie entlang des Umfangs des Verstärkungsrings (10) bildet.

3. Verstärkungsring (10) nach Anspruch 1, wobei die Nut (6) eine unterbrochene Linie entlang des Umfangs des Verstärkungsrings (10) bildet.

4. Verstärkungsring (10) nach einem der vorangehenden Ansprüche, wobei der Querschnitt der Nut (6) die Form eines umgekehrten Buchstaben V in Bezug auf das zweite äußerste Ende (3) hat.

5. Verstärkungsring (10) nach einem der vorangehenden Ansprüche, wobei die Seitenwand (1) Bereiche (7) reduzierter Dicke umfasst, um die Gesamtmenge an für die Herstellung des Rings (10) eingesetztem Material weiter zu reduzieren.

6. Verstärkungsring (10) nach einem der vorangehenden Ansprüche, wobei die plane Fläche (5) eine Nut (8) entlang ihres Umfangs umfasst.

7. Verstärkungsring (10) nach einem der vorangehenden Ansprüche, wobei der Verstärkungsring (10) aus einem biologisch abbaubaren und/oder kompostierbaren und/oder biobasierten Material, beispielsweise aus PLA, PHA, PBS, Stärkemischungen, biobasiertem PE, PET, PA, PT, besteht.

8. Kapsel (20) zum Bereiten von Getränken, beispielsweise Kaffee, die umfasst:
- einen Verstärkungsring (10) nach einem der Ansprüche 1 bis 7; sowie
- einen Kapsel-Körper (30), der so ausgeführt ist, dass er ein Einschlussvolumen für das zum Bereiten des gewünschten Getränks verwendete Produkt, beispielsweise gemahlenen Kaffee, bildet.

9. Kapsel (20) nach Anspruch 8, wobei der Kapsel-Körper (30) aus einem thermoformbaren Filtermaterial besteht und mittels Schweißen an der Seitenwand (1) des Verstärkungsrings (10) befestigt wird.

10. Verfahren zum Herstellen einer Kapsel (20) nach Anspruch 8 oder 9, wobei das Verfahren einen Schweißschritt umfasst, der mittels einer Schweißvorrichtung (210) mit fester Geometrie realisiert wird,
wobei der Kapsel-Körper (30) von der Innenseite des Kapsel-Körpers (30) aus an den Verstärkungsring (10) angeschweißt wird, nachdem der Kapsel-Körper (30) in den Verstärkungsring (10) eingeführt worden ist, und
wenigstens ein Abschnitt der Seitenwand (1b) des Verstärkungsrings (10) so ausgeführt ist, dass er sich aufgrund des Vorhandenseins der Nut (6) während des Schrittes des Anschweißens des Kapsel-Körpers (30) an den Verstärkungsring (10) elastisch verformt und sich an die Struktur der Schweißvorrichtung (210) mit fester Geometrie anpasst.

11. Verfahren nach Anspruch 10, wobei der zweite Abschnitt (1b) so ausgeführt ist, dass er sich elastisch verformt, wenn er mit der Schweißvorrichtung (210) mit fester Geometrie in Kontakt gebracht wird, um das Anschweißen des Kapsel-Körpers (30) an den Verstärkungsring (10) zu unterstützen.

12. Verfahren für die Herstellung von Getränken mittels eines Systems (100), das umfasst:
- eine Kapsel (20) nach Anspruch 8 oder 9; sowie
- einen Behälter (50), der so ausgeführt ist, dass er die Kapsel (20) während des Schrittes des Zuführens von unter Druck stehendem Wasser für die Herstellung des Getränkes aufnimmt, wobei der Behälter (50) eine seitliche Fläche (51) und einen Boden (55) umfasst, die die Kammer (V) bilden, die so ausgeführt ist, dass sie die Kapsel (20) während der Zufuhr aufnimmt;
wobei das Verfahren den Schritt des Ausbildens einer Dichtung zwischen einem vordefinierten Abschnitt einer Innenfläche (52) der seitlichen Fläche (51) des Behälters (50) und wenigstens einem Abschnitt der Seitenwand (1a) des Verstärkungsrings (10) umfasst,
und der wenigstens eine Abschnitt der Seitenwand (1a) so ausgeführt ist, dass er sich aufgrund des Vorhandenseins der Nut (6) elastisch verformt, wenn er mit dem vordefinierten Abschnitt der Innenfläche (52) in Kontakt ist, und so ausgeführt ist, dass er sich an die Geometrie des vordefinierten Abschnitts der Innenfläche (52) anpasst, um das Austreten des Getränks an der Grenzfläche zwischen dem Verstärkungsring (10) und dem Behälter (50) zu vermeiden.

13. Verfahren für die Herstellung eines Getränks nach Anspruch 12, wobei die Seitenwand (1) einen ersten Durchmesser (D1) hat und die Kammer (V) einen zweiten Durchmesser (D2) in Entsprechung zu dem aufnehmenden Abschnitt des Verstärkungsrings (10) hat und der erste Durchmesser (D1) genauso groß ist wie oder größer als der zweite Durchmesser (D2), und
der Schritt des Ausbildens einer Dichtung einschließt, dass wenigstens ein Abschnitt der Seitenwand (1a), wenn sie in Kontakt mit der Innenfläche (52) ist, sich elastisch so verformt, dass die elastische Verformung die Einführung des Verstärkungsrings (10) in die Kammer (V) zulässt und die Dichtung ermöglicht.

14. Verfahren für die Herstellung eines Getränks nach Anspruch 12 oder 13, wobei der Schritt des Ausbildens einer Dichtung einschließt, dass während des Schrittes des Zuführens von unter Druck stehendem Wasser wenigstens ein Teil des unter Druck stehenden Wassers in die Nut (6) eintritt und wenigstens einen Abschnitt der Seitenwand (1a) elastisch verformt, wodurch eine Dichtung zwischen der Seitenwand (1) und der Innenfläche (52) ausgebildet wird.

15. Verfahren für die Herstellung eines Getränks nach einem der Ansprüche 12 bis 14, wobei der erste Abschnitt (1a) der Kammer (V) zugewandt ist und eine erste Dicke hat, und der zweite Abschnitt (1b) dem Kapsel-Körper (30) zugewandt ist und eine zweite Dicke hat, und die erste Dicke geringer ist als die zweite Dicke, um die elastische Verformung des ersten Abschnitts (1a) zu unterstützen und die Dichtung auszubilden.

## Revendications

1. Anneau de renforcement (10) pour capsules destinées à obtenir des boissons, par exemple du café, comprenant :
- une paroi latérale (1) ayant une première extrémité (2), une deuxième extrémité (3) et une épaisseur (4) ; et
- une surface plane (5), de préférence d'épaisseur uniforme, faisant saillie de ladite paroi latérale (1) en correspondance de ladite première extrémité (2),
dans lequel ladite paroi latérale (1) et ladite surface plane (5) saillante sont de préférence constituées d'un seul corps,
**caractérisé en ce que :**
ladite paroi latérale (1) comprend une rainure (6) en correspondance avec ladite deuxième extrémité (3), de manière à réduire ladite épaisseur (4) de ladite paroi latérale (1) en correspondance avec ladite deuxième extrémité (3), et
dans lequel ladite paroi latérale (1), en correspondance de ladite deuxième extrémité (3), est configurée de manière à inclure une première partie (1a), orientée vers le côté extérieur dudit anneau (10), et une deuxième partie (1b), orientée vers le côté intérieur dudit anneau (10), ladite première partie (1a) et ladite deuxième partie (1b) étant divisées par ladite rainure (6).

2. Anneau de renforcement (10) selon la revendication 1, dans lequel ladite rainure (6) forme une ligne continue le long du périmètre dudit anneau de renforcement (10).

3. Anneau de renforcement (10) selon la revendication 1, dans lequel ladite rainure (6) forme une ligne discontinue le long du périmètre dudit anneau de renforcement (10).

4. Anneau de renforcement (10) selon l'une quelconque des revendications précédentes, dans lequel la section transversale de ladite rainure (6) a la forme d'un V renversé par rapport à ladite deuxième extrémité (3).

5. Anneau de renforcement (10) selon l'une quelconque des revendications précédentes, dans lequel ladite paroi latérale (1) comprend des zones d'épaisseur réduite (7), de manière à réduire davantage la quantité totale de matériau utilisé pour la production dudit anneau (10).

6. Anneau de renforcement (10) selon l'une quelconque des revendications précédentes, dans lequel ladite surface plane (5) comprend une rainure (8) le long de son périmètre.

7. Anneau de renforcement (10) selon l'une quelconque des revendications précédentes, dans lequel ledit anneau de renforcement (10) comprend un matériau biodégradable et/ou compostable et/ou biosourcé, par exemple PLA, PHA, PBS, mélanges d'amidon, PE biosourcé, PET, PA, PT.

8. Capsule (20) pour obtenir des boissons, par exemple du café, comprenant :
- un anneau de renforcement (10) selon l'une quelconque des revendications 1 à 7 ; et
- un corps de capsule (30) configuré pour former un volume de confinement pour le produit utilisé pour obtenir la boisson souhaitée, par exemple du café moulu.

9. Capsule (20) selon la revendication 8, dans laquelle ledit corps de capsule (30) est constitué d'un matériau filtrant thermoformable et est fixé à ladite paroi latérale (1) dudit anneau de renforcement (10) par soudage.

10. Procédé de production d'une capsule (20) selon la revendication 8 ou 9, ledit procédé comprenant une étape de soudage réalisée par une soudeuse à géométrie fixe (210),
dans lequel ledit corps de capsule (30) est soudé audit anneau de renforcement (10) depuis le côté intérieur dudit corps de capsule (30), après que ledit corps de capsule (30) a été inséré dans ledit anneau de renforcement (10), et
dans lequel au moins une partie de ladite paroi latérale (1b) dudit anneau de renforcement (10) est configurée pour se déformer élastiquement, grâce à la présence de ladite rainure (6), et pour s'adapter à la structure de ladite soudeuse à géométrie fixe (210) lors de ladite étape de soudage dudit corps de capsule (30) audit anneau de renforcement (10).

11. Procédé selon la revendication 10, dans lequel ladite deuxième partie (1b) est configurée pour se déformer élastiquement lorsqu'elle est mise en contact avec ladite soudeuse à géométrie fixe (210), de manière à assister le soudage dudit corps de capsule (30) audit anneau de renforcement (10).

12. Procédé de production de boissons au moyen d'un système (100) comprenant :
- une capsule (20) selon la revendication 8 ou 9 ; et
- un récipient (50) configuré pour accueillir ladite capsule (20) lors de l'étape d'alimentation en eau sous pression pour la production de la boisson, ledit récipient (50) comprenant une surface latérale (51) et un fond (55) formant le compartiment (V) configuré pour accueillir ladite capsule (20) lors de l'alimentation ;
ledit procédé comprenant l'étape consistant à réaliser un joint entre une partie prédéfinie d'une surface interne (52) de ladite surface latérale (51) dudit récipient (50) et au moins une partie de ladite paroi latérale (1a) dudit anneau de renforcement (10),
dans lequel ladite au moins une partie de ladite paroi latérale (1a) est configurée pour se déformer élastiquement, grâce à la présence de ladite rainure (6), lorsqu'elle est en contact avec ladite partie prédéfinie de ladite surface interne (52), et est configurée pour s'adapter à la géométrie de ladite partie prédéfinie de ladite surface interne (52), de manière à éviter la fuite de ladite boisson de l'interface entre ledit anneau de renforcement (10) et ledit récipient (50).

13. Procédé de production d'une boisson selon la revendication 12, dans lequel ladite paroi latérale (1) a un premier diamètre (D1) et ledit compartiment (V) a un deuxième diamètre (D2) en correspondance avec ladite partie d'accueil dudit anneau de renforcement (10) et ledit premier diamètre (D1) est égal ou supérieur audit deuxième diamètre (D2), et
ladite étape de réalisation d'un joint implique qu'au moins une partie de ladite paroi latérale (1a) se déforme élastiquement au contact de ladite surface interne (52), de sorte que ladite déformation élastique permette l'insertion dudit anneau de renforcement (10) dans ledit compartiment (V) et permette ledit joint.

14. Procédé de production d'une boisson selon la revendication 12 ou 13, dans lequel ladite étape de réalisation d'un joint implique que, lors de l'étape d'alimentation en eau sous pression, au moins une partie de ladite eau sous pression pénètre dans ladite rainure (6) et déforme élastiquement au moins une partie de ladite paroi latérale (1a), réalisant ainsi un joint entre ladite paroi latérale (1) et ladite surface interne (52).

15. Procédé de production d'une boisson selon l'une quelconque des revendications 12 à 14, dans lequel ladite première partie (1a) est orientée vers ledit compartiment (V) et présente une première épaisseur, et ladite deuxième partie (1b) est orientée vers ledit corps de capsule (30) et présente une deuxième épaisseur, et ladite première épaisseur est plus fine que ladite deuxième épaisseur, de manière à favoriser ladite déformation élastique de ladite première partie (1a) et à réaliser ledit joint.
